# EUROPÄISCHE PATENTSCHRIFT

(11) **EP 2 304 301 B1**
(45) Veröffentlichungstag und Bekanntmachung des Hinweises auf die Patenterteilung: **28.08.2013**
(21) Anmeldenummer: 09780255.7
(22) Anmeldetag: 07.07.2009
(51) Int. Cl.: F16L 33/22, F16L 13/14, F16L 33/207, F16L 37/138

(54) **ANORDNUNG MIT EINEM FITTING, EINEM KRAFTÜBERTRAGUNGSELEMENT UND EINER GLEITHÜLSE, SOWIE VERFAHREN ZUR HERSTELLUNG EINER UNLÖSBAREN WERKSTÜCKVERBINDUNG**
ARRANGEMENT WITH A FITTING, A FORCE-TRANSMITTING ELEMENT AND A SLIDING SLEEVE, AND METHOD FOR PRODUCING A NON-DETACHABLE WORKPIECE CONNECTION
ENSEMBLE AVEC UNE FERRURE, UN ELÉMENT DE TRANSMISSION DE FORCE ET UNE BAGUE COULISSANTE, ENSEMBLE ET PROCÉDÉ DE FABRICATION D'UNE LIAISON DE PIÈCES NON DÉTACHABLE

(30) Priorität: 07.07.2008 DE 102008031554; 25.08.2008 DE 102008039446
(43) Veröffentlichungstag der Anmeldung: 06.04.2011
(73) Patentinhaber: Viega GmbH & Co. KG, 57439 Attendorn (DE)
(72) Erfinder: MICHELS, Mathias, 57368 Lennestadt (DE); HÜTTE, Andreas, 57439 Attendorn (DE); SINOPLU, Sudi, 57439 Attendorn (DE)
(74) Vertreter: Cohausz & Florack
(86) Internationale Anmeldenummer: PCT/EP2009/058600
(87) Internationale Veröffentlichungsnummer: WO 2010/003951

(56) Entgegenhaltungen:
- WO-A1-2008/040941
- DE-C1- 10 133 183
- DE-C1- 19 512 986
- DE-U1-202004 000 031
- US-A- 4 482 174
- US-A- 5 470 113
- US-B1- 6 450 553

## Beschreibung

Die Erfindung offenbart ein Kraftübertragungselement für unlösbare Werkstückverbindungen, mit einem Flanschabschnitt und mit einem Übertragungsabschnitt, wobei der Übertragungsabschnitt eine im Wesentlichen zylinderförmige Innenumfangsfläche aufweist und wobei die Wanddicke des Übertragungsabschnitts sich von dem dem Flanschabschnitt proximalen Ende bis zu dem dem Flanschabschnitt distalen Ende wenigsten abschnittsweise verjüngt. Die Erfindung offenbart weiterhin eine Gleithülse für unlösbare Werkstückverbindungen, mit einem ersten Ende, welches im Querschnitt eine bestimmte Dicke aufweist, und mit einem zweiten Ende, welches gegenüber dem ersten Ende im Querschnitt verjüngt ist, wobei der Außendurchmesser über die Außenumfangsfläche in axialer Richtung wenigstens abschnittsweise konstant ist. Die Erfindung betrifft eine Anordnung aus einem Fitting, dem Kraftübertragungselement und der Gleithülse sowie ein Verfahren zur Herstellung einer unlösbaren Werkstückverbindung zwischen einem Fitting, einem Rohr, einem Kraftübertragungselement und einer Gleithülse.

Eine Anordnung mit einem Kraftübertragungselement und mit einer Gleithülse der eingangs genannten Art sind beispielsweise aus der DE 20 2004 000 031 U1 bekannt, die den Oberbegriff vom Anspruch 1 offenbart Diese zeigt eine Rohrpresskupplung mit einer radial aufzuschiebenden Presshülse, einer Quetschhülse und einer in das Rohrende eingesetzten Stützhülse. Die Quetschhülse weist eine Profilierung auf, welche mit der Profilierung der Stützhülse korrespondiert. Wird die Stützhülse über die Quetschhülse geschoben, wird dadurch die Quetschhülse und das zwischen Stützhülse und Quetschhülse befindliche Rohr umgeformt und mit der Stützhülse verpresst.

Eine ähnliche Rohrpresskupplung mit einer Quetschhülse, einer über die Quetschhülse schiebbare Presshülse mit einer radial umlaufenden Presswulst und einem Fittingstützkörper wird in der Druckschrift DE 101 33 183 C1 offenbart, und die dem Oberbegriff von Anspruch 5 entspricht. Auch hier wird die Presshülse über die Quetschhülse geschoben, sodass dabei die Quetschhülse umgeformt wird.

Die Patentschrift EP 0 159 997 B1 offenbart ein Verfahren zur Herstellung einer unlösbaren Werkstückverbindung zwischen einem einen Flansch aufweisenden Fitting, einem Rohr, einem Kraftübertragungselement und einem Pressring, wobei der Pressring axial auf das Kraftübertragungselement, welches wiederum das Rohr und das von dem Rohr umgriffene Fitting umgreift, bis zum Anschlag an den Flansch aufgeschoben wird und somit eine Einformung des Rohrs in ein an der Außenumfangsfläche des Fittings vorgesehenes Profil bewirkt.

Die Neigewinkel der Flächen, mit welchen das Kraftübertragungselement und der Pressring während des Pressvorgangs interagieren, bezüglich der Mittelachse sind dabei gering, um einen möglichst großen Anteil der axialen Dynamik in eine radial einwärtige Pressbewegung umsetzen zu können. Die geringen Neigewinkel haben jedoch eine weitgreifende axiale Bewegung des Pressrings zur Folge. Dementsprechend müssen die Presswerkzeuge als auch die zu verpressenden Werkstücke wie beispielsweise das Fitting weitgreifende Abmessungen aufweisen. Zwar ist es grundsätzlich möglich, die Interaktionsflächen des Pressrings und des Kraftübertragungselements mit höheren Neigewinkeln zur Mittelachse zu versehen. Allerdings sind dadurch die Selbsthaltekräfte zwischen dem Kraftübertragungselement und dem Pressring nach dem Pressvorgang verringert, so dass sich diese, insbesondere unter dem Einfluss von Temperaturwechseln und der damit verbundenen Materialausdehnung bzw. - kontraktion leichter lösen und somit die Gefahr des Auftretens von Undichtigkeiten erhöhen können.

Der vorliegenden Erfindung liegt daher das technische Problem zu Grunde, eine Anordnung sowie ein Verfahren zur Herstellung einer unlösbaren Werkstückverbindung anzugeben, mit welchen eine betriebssichere unlösbare Werkstückverbindung trotz geringerer Abmessungen der Werkstücke erreicht werden kann.

Gemäß einer ersten Lehre der vorliegenden Erfindung wird das technische Problem durch eine Anordnung gemäß dem Patentanspruch 1 unter anderem mit einem Kraftübertragungselement gelöst, wobei das dem Flanschabschnitt proximale Ende des Übertragungsabschnitts an der Außenumfangsfläche wenigstens eine Rastvertiefung aufweist.

Auf diese Weise ist es möglich, eine Außenumfangsfläche des Übertragungsabschnitts mit gegenüber der Mittelachse erhöhtem Neigewinkel auszubilden, so dass eine Verringerung sowohl der geometrischen Abmessungen des Kraftübertragungselements als auch des axialen Verpresswegs umsetzbar ist.

In einer Ausgestaltung des Kraftübertragungselements ist an der Außenumfangsfläche zwischen der Rastvertiefung und dem distalen Ende des Übertragungsabschnitts wenigstens ein Mittel zum temporären Fixieren einer Gleithülse angeordnet. Die Mittel zum temporären Fixieren einer Gleithülse können beispielsweise reibschlüssig, stoffschlüssig, beispielsweise als Kleber, oder formschlüssig, beispielsweise als Gewinde oder Vertiefung, ausgebildet sein. Diese Ausgestaltung ist vorteilhaft zur Ausbildung einer Außenumfangsfläche des Übertragungsabschnitts mit gegenüber der Mittelachse weiter erhöhtem Neigewinkel. Denn durch das Vorsehen eines Mittel zum temporären Fixieren einer Gleithülse und einer Rastvertiefung an dem Übertragungsabschnitt werden entlang der axialen Erstreckung des Übertragungsabschnitts wenigstens zwei definierte Positionen geschaffen, an denen eine Gleithülse, welche zur Ausübung der für die Verpressung erforderlichen Kräfte verwendet wird, gehalten werden kann. Bei entsprechender Ausgestaltung kann - in einem Verfahren zum Herstellen einer unlösbaren Werkstückverbindung zwischen einem Fitting, einem Rohr, dem Kraftübertragungselement und der Gleithülse - die Gleithülse in einem ersten Schritt des Verfahrens, bevor die eigentliche Verpressung erfolgt, an dem Kraftübertragungselement positioniert werden, wobei das Mittel zum temporären Fixieren einer Gleithülse eine axiale Bewegung der Gleithülse von dem Kraftübertragungselement herunter hemmt.

Die an dem Übertragungsabschnitt des Kraftübertragungselements angeordnete Rastvertiefung wiederum kann vorteilhaft verwendet werden, um die Gleithülse nach erfolgter axialer Verpressung mittels eines radial einwärtigen Pressvorgangs an dem Kraftübertragungselement zu fixieren, beispielsweise indem Abschnitte der Gleithülse in die Rastvertiefung eingeformt werden. Somit werden nach dem Abschließen der Pressvorgänge Bewegungen der Gleithülse von dem Kraftübertragungselement herunter effektiv gehemmt, selbst wenn das Material der Werkstücke auf Grund von Temperaturschwankungen einer Ausdehnung bzw. Kontraktion unterworfen sein sollte. Die Gefahr von Undichtigkeiten wird entsprechend reduziert. Somit kann eine stabilere und dauerhaftere Werkstückverbindung geschaffen werden, auch wenn die Neigewinkel höher als sonst üblich und sowohl die äußeren Abmessungen der Werkstücke, insbesondere des Kraftübertragungselements als auch die axialen Verpresswege verringert sind.

Der Flanschabschnitt bietet vorzugsweise eine Anlagefläche für eine Stoßfläche der Gleithülse vor und/oder nach den Pressvorgängen und begrenzt demnach die axiale Beweglichkeit der Gleithülse in wenigstens einer Richtung. Der Übertragungsabschnitt wiederum ermöglicht es, die Dynamik der axial ausgeführten Bewegung des Presswerkzeugs zumindest teilweise in eine radial einwärtige Bewegung umzusetzen und somit die Kräfte aufzubringen, welche erforderlich sind, um den von dem Kraftübertragungselement umgriffenen Rohrabschnitt auf einen Stützkörper eines Fittings aufzuformen bzw. in das gegebenenfalls vorhandene Profil des Stützkörpers des Fittings einzuformen, wodurch die kraftgegebenenfalls auch formschlüssige Werkstückverbindung zwischen den Werkstücken, insbesondere dem Rohr und dem Fitting geschaffen wird.

Die Innenumfangsfläche des Übertragungsabschnitts ist im Wesentlichen zylinderförmig ausgebildet. Dies ist so zu verstehen, dass ein für eine unlösbare Werkstückverbindung vorgesehenes Rohr übertragungsabschnittseitig in das Kraftübertragungselement, gegebenenfalls reibschlüssig einführbar sein soll. Da viele Rohre einen kreisringförmigen Außenquerschnitt aufweisen, kann daher eine entsprechend angepasste kreiszylinderförmige Ausgestaltung der Innenumfangsfläche des Übertragungsabschnitts zweckmäßig sein. Allerdings kann das Kraftübertragungselement auch für andere Rohraußenquerschnitte, beispielsweise ellipsenförmige oder prismenförmige Querschnitte geeignet ausgestaltet werden. Der Begriff zylinderförmig ist also sehr weit zu verstehen. Insbesondere kann die im Wesentlichen zylinderförmige Innenumfangsfläche durch bauliche Merkmale, welche den zylindrischen Charakter der Fläche, beispielsweise auf Grund ihrer kleinen Dimensionen nur unwesentlich ändern, modifiziert sein.

Durch die wenigstens abschnittsweise Verjüngung der Wanddicke des Übertragungsabschnitts wird vorteilhafter Weise eine Außenumfangsfläche geschaffen, welche in der Wechselwirkung mit einer geeigneten, zum Zwecke der Verpressung betätigten Gleithülse während des axialen Pressvorgangs eine gleichmäßigere Kraftausübung ermöglicht. Auf diese Weise können die Dichtheit einer unlösbaren Werkstückverbindung beeinträchtigende Unregelmäßigkeiten im Pressergebnis zwischen dem Stützkörper eines Fittings und einem Rohr vermieden werden. Maßnahmen in Form zusätzlicher Dichtelemente, wie sie nach dem Stand der Technik häufig zwischen dem Stützkörper und dem Rohrinneren angeordnet werden, sind dadurch ebenfalls vermeidbar. Abschnittsweise Verjüngung bedeutet insbesondere, dass an der Außenumfangsfläche des Übertragungsabschnitts noch weitere Formmerkmale angeordnet werden können, beispielsweise weitere Vertiefungen zwischen dem Mittel zum temporären Fixieren einer Gleithülse und dem distalen Ende des Übertragungsabschnitts, welche den Verlauf der Verjüngung, also der Wandstärkenreduzierung, zwar modifizieren, aber in der Tendenz bestehen lassen.

Die Rastvertiefung kann ringförmig umlaufend ausgebildet sein, oder mehrere Rastvertiefungen können auf einer ringförmig umlaufenden Trajektorie, insbesondere in regelmäßigen Abständen angeordnet sein. Durch die bauliche Ausgestaltung der Rastvertiefung als ringförmig umlaufende Vertiefung kann insbesondere ein bezüglich dieses Merkmals rotationssymmetrisches Kraftübertragungselement zur Verfügung gestellt werden, welches vorteilhaft mit anderen rotationssymmetrischen Werkstücken, beispielsweise Gleithülsen interagieren kann. Darüber hinaus wird die Haltbarkeit einer hergestellten Werkstückverbindung über den gesamten Umfang der Werkstücke sichergestellt. Es ist aber auch möglich, statt einer ringförmig umlaufenden Rastvertiefung mehrere einzelne Rastvertiefungen, beispielsweise in Form von Kugelsegmenten mit entsprechenden Hohlkalottenflächen, vorzusehen, welche gegebenenfalls auf einer ringförmig um den Übertragungsabschnitt umlaufenden Linie angeordnet sind. Dies kann fertigungstechnisch vorteilhaft sein, wenn bei der Herstellung des Kraftübertragungselements wenig Material des Werkstücks ausgenommen werden soll.

In einer weiteren Ausgestaltung des Kraftübertragungselements ist an der Außenumfangsfläche zwischen der Rastvertiefung und dem distalen Ende des Übertragungsabschnitts wenigstens eine Haltevertiefung angeordnet. Diese Ausgestaltung des Mittels zum temporären Fixieren einer Gleithülse als Haltevertiefung ist zuverlässig und besonders einfach herzustellen. Um ein sicheres Einrasten der Gleithülse in die Haltevertiefung zu gewährleisten, kann an der Gleithülse ein entsprechendes Gegenstück vorgesehen sein, dass zur Fixierung der Gleithülse mit der Haltevertiefung in Eingriff vorliegt.

Die Haltevertiefung kann ringförmig umlaufend ausgebildet sein, oder mehrere Haltevertiefungen können auf einer ringförmig umlaufenden Trajektorie, insbesondere in regelmäßigen Abständen angeordnet sein. Für die Haltevertiefungen gelten die zuvor zu den Rastvertiefungen gemachten Ausführungen in analoger Weise.

In einer weiteren Ausgestaltung des Kraftübertragungselements kann an der Außenumfangsfläche des Übertragungsabschnitts wenigstens eine Vertiefung zur Verringerung der Kontaktfläche vorgesehen sein. Derartige Vertiefungen können beispielsweise in der Form von Rillen oder auch als Riffelung ausgebildet werden. Der Widerstand, den das Kraftübertragungselement und die Gleithülse einer einander gegenläufigen axialen Verpressbewegung entgegen setzen, ist im Wesentlichen von der Kontaktfläche bzw. den Kontaktflächen zwischen der Außenumfangsfläche des Übertragungsabschnitts und der Innenumfangsfläche der Gleithülse abhängig. Durch die Vertiefungen zur Verringerung der Kontaktflächen wird dieser Widerstand reduziert, weshalb das Aufführen der Gleithülse auf den Übertragungsabschnitt während der axialen Pressbewegung und der axiale Pressvorgang als solches somit erleichtert werden.

Es ist möglich, die Außenumfangsfläche des Übertragungsabschnitts wenigstens abschnittsweise kegelsegmentförmig auszubilden, wobei der Neigungswinkel relativ zur Mittelachse insbesondere 15° bis 75°, vorzugsweise 25° bis 65°, speziell 35° bis 55° beträgt. Durch die Wahl eines relativ hohen Winkels können sowohl die äußeren Abmessungen des Kraftübertragungselements als auch der axiale Verpressweg verringert werden.

Die Außenumfangsfläche des Übertragungsabschnitts kann zumindest abschnittsweise gleitfördernd ausgebildet sein. Auf diese Weise kann der Pressvorgang erleichtert werden. Die Außenumfangsfläche gleitfördernd auszubilden, kann auf unterschiedliche Weise geschehen. Es ist möglich, die entsprechenden Abschnitte des Übertragungsabschnitts zweiteilig auszubilden, und die Flächen aus einem Material wie Polytetrafluorethylen oder ähnlichem zu fertigen. Es ist allerdings auch möglich, das Gleitvermögen mittels einer gleitfördernden Beschichtung der Flächen, beispielsweise mit einer Gleitlackbeschichtung zu erhöhen.

Es ist möglich, dass der Flanschabschnitt an seiner Innenumfangsfläche ein radial einwärts ausgreifendes Anlageelement aufweist. Dies ist insbesondere günstig, wenn die Innenumfangsfläche des Flanschabschnitts, insbesondere deren Form bzw. deren Durchmesser in einer für eine Presspassung mit dem Grundkörper eines Fittings geeigneten Weise ausgestaltet ist. Damit lässt sich eine reibschlüssige Passung des Kraftübertragungselements auf einem Fitting erzielen, welche gegebenenfalls in der Lage ist, das Kraftübertragungselement und das Fitting auch bei während des Pressvorgangs ausgeübten Kräften in einer weitgehend festen Position zueinander zu halten.

Gemäß der ersten Lehre der vorliegenden Erfindung weist die Anordnung unter anderem auch eine Gleithülse auf wobei an der Innenumfangsfläche des verjüngten Endes wenigstens ein radial einwärts ausgreifender Rastvorsprung angeordnet ist.

Mittels des radial einwärts ausgreifenden Rastvorsprungs an der Innenumfangsfläche der Gleithülse kann die Gleithülse stabil an dem Kraftübertragungselement positioniert werden. Beispielsweise steht der Rastvorsprung mit der Haltevertiefung in Eingriff, wenn die Gleithülse vor der Einleitung der Pressvorgänge auf den Übertragungsabschnitt des Kraftübertragungselements aufgeschoben ist, und hemmt damit eine Bewegung der Gleithülse von dem Kraftübertragungselement herunter. Alternativ kann die Gleithülse im Bereich des Rastvorsprungs auch mit dem Kraftübertragungselement reibschlüssig, stoffschlüssig, beispielsweise durch einen Kleber, oder auf eine andere Art formschlüssig, beispielsweise durch ein Gewinde am Rastvorsprung und am Kraftübertragungselement, verbunden sein. Somit kann insbesondere eine stabilere Prozessführung gewährleistet werden. Vorzugsweise besteht die Gleithülse ferner aus einem elastischen Material, so dass das verjüngte Ende der Gleithülse im Zuge des axialen Pressvorgangs elastisch leicht aufgeweitet werden kann, bis eine vorläufige Endposition des Rastvorsprungs gegenüber der Rastvertiefung des Kraftübertragungselements vor dem Einleiten des radial einwärtigen Pressvorgangs erreicht ist. Die zumindest abschnittsweise vorliegende Konstanz des Außendurchmessers der Außenumfangsfläche der Gleithülse kann beispielsweise durch eine leichte radial auswärtige Abwinkelung des verjüngten Endes modifiziert sein. In einer vorzugsweise auf das Kraftübertragungselement angepassten Ausgestaltung trägt die Gleithülse ebenfalls dazu bei, dass sowohl die äußeren Abmessungen der Werkstücke als auch die axialen Verpresswege verringert werden können.

In einer Ausgestaltung der Gleithülse ist das verjüngte Ende radial auswärts, insbesondere leicht, beispielsweise unter einem Winkel von 5° bis 10°, insbesondere 6° bis 8° zur Mittelachse, abgewinkelt. Mit dieser Ausgestaltung kann ein sich dem axialen Pressvorgang anschließender radial einwärtiger Pressvorgang erleichtert werden. Denn nach dem axialen Pressvorgang ragt das abgewinkelte Ende vorzugsweise leicht über die von der Außenumfangsfläche des Flanschabschnitts des Kraftübertragungselements definierten Ebene hervor und bietet somit einem Presswerkzeug für die radial einwärtige Verpressung einen günstigeren Ansatzpunkt zu dem die Stabilität der unlösbaren Werkstückverbindung fördernden Einformen des Abschnitts der Gleithülse in das Kraftübertragungselement.

Analog zu den zuvor gemachten Ausführungen hinsichtlich der Rastvertiefung bzw. der Haltevertiefung kann der Rastvorsprung ringförmig umlaufend ausgebildet sein, oder mehrere Rastvorsprünge können auf einer ringförmig umlaufenden Trajektorie, insbesondere in regelmäßigen Abständen angeordnet sein.

Es kann an der Innenumfangsfläche der Gleithülse wenigstens eine Vertiefung zur Verringerung der Kontaktfläche vorgesehen sein.

In einer weiteren vorteilhaften Ausgestaltung der Gleithülse kann die Innenumfangsfläche wenigstens abschnittsweise kegelsegmentförmig ausgebildet sein, wobei der Neigungswinkel relativ zur Mittelachse insbesondere 15° bis 75°, vorzugsweise 25° bis 65°, speziell 35° bis 55° beträgt.

Es ist möglich, die Innenumfangsfläche der Gleithülse zumindest abschnittsweise gleitfördernd auszubilden.

Hinsichtlich weiterer Vorteile der Ausgestaltungen der Gleithülse wird auf die Ausführungen zu dem Kraftübertragungselement verwiesen.

Gemäß der ersten Lehre der vorliegenden Erfindung wird das technische Problem also mit einer Anordnung gemäß dem Oberbegriff des Patentanspruchs 1 dadurch gelöst, dass das dem Flanschabschnitt proximale Ende des Übertragungsabschnitts des Kraftübertragungselements an der Außenumfangsfläche wenigstens eine Rastvertiefung aufweist, dass an der Innenumfangsfläche des verjüngten Endes der Gleithülse wenigstens ein radial einwärts ausgreifender Rastvorsprung angeordnet ist und dass das Kraftübertragungselement den Stützkörper und wenigstens teilweise den Grundkörper umgreift.

Durch die erfindungsgemäße Anordnung kann ein System aus Werkstücken geschaffen werden, welches für einen Verwender im Handel erhältlich ist. Der Verwender hat also lediglich darauf zu achten, dass die Form des Außenquerschnitts und/oder der Außendurchmesser der von ihm zu verpressenden Rohre zu den jeweiligen Abmessungen des Fittings, beispielsweise des Stützkörpers bzw. des Kraftübertragungselements, beispielsweise des Übertragungsabschnitts passend sind. Der Planungsaufwand ist damit reduzierbar.

In einer vorteilhaften Ausgestaltung der Anordnung ist an der Außenumfangsfläche zwischen der Rastvertiefung und dem distalen Ende des Übertragungsabschnittes wenigstens ein Mittel zum temporären Fixieren einer Gleithülse angeordnet, die Gleithülse mit dem verjüngten Ende auf den Übertragungsabschnitt so weit aufgeschoben, dass die Gleithülse mit dem Mittel zum temporären Fixieren einer Gleithülse in Anlage liegt und die Gleithülse durch das Mittel zum temporären Fixieren einer Gleithülse am Übertragungsabschnitt temporär fixiert ist. Die temporäre Fixierung der Gleithülse am Übertragungsabschnitt bewirkt, dass einer Bewegung der Gleithülse von dem Kraftübertragungselement herunter vorgebeugt wird.

In einer weiteren vorteilhaften Ausgestaltung der Anordnung ist an der Außenumfangsfläche zwischen der Rastvertiefung und dem distalen Ende des Übertragungsabschnitts wenigstens eine Haltevertiefung angeordnet und die Gleithülse mit dem verjüngten Ende auf den Übertragungsabschnitt so weit aufgeschoben, dass der Rastvorsprung in die Haltevertiefung eingreift. Die Ausgestaltung des Mittels zum temporären Fixieren einer Gleithülse als Haltevertiefung ist zuverlässig und besonders einfach herzustellen.

In einer vorteilhaften Ausgestaltung der Anordnung liegen die Innenumfangsfläche der Gleithülse und die Außenumfangsfläche des Übertragungsabschnitts vorzugsweise wenigstens teilweise in reibschlüssiger Anlage. Damit kann einer Bewegung der Gleithülse aus der vor den Pressvorgängen eingenommenen, definierten Zwischenposition heraus und von dem Übertragungsabschnitt des Kraftübertragungselements herunter entgegen gewirkt werden. Die Prozesssicherheit kann damit verbessert werden.

Der Flanschabschnitt kann an dem Grundkörper fixiert sein, wobei insbesondere ein Anlageelement des Flanschabschnitts an einer in axialer Richtung gewandten Stoßfläche des Grundkörpers anliegt. Insbesondere kann eine Fixierung nach der Art einer Presspassung zur Anwendung kommen. Auf diese Weise lässt sich eine reibschlüssige Passung des Kraftübertragungselements auf dem Fitting erzielen, welche gegebenenfalls in der Lage ist, das Kraftübertragungselement und das Fitting auch bei während des Pressvorgangs ausgeübten Kräften in einer weitgehend festen Position zueinander zu halten.

Es ist besonders bevorzugt, dass die Innenumfangsfläche der Gleithülse und die Außenumfangsfläche des Übertragungsabschnitts des Kraftübertragungselements aufeinander angepasst sind. Dadurch kann ein hohes Maß an Kompatibilität zwischen den Gleithülsen und den Kraftübertragungselementen erreicht werden.

Hinsichtlich weiterer Vorteile der erfindungsgemäßen Anordnung wird auf die zuvor gemachten Ausführungen zu der Gleithülse und dem Kraftübertragungselement verwiesen.

Gemäß einer weiteren Lehre der vorliegenden Erfindung wird das technische Problem auch durch ein Verfahren zur Herstellung einer unlösbaren Werkstückverbindung zwischen einem Fitting, einem Rohr, einem Kraftübertragungselement und einer Gleithülse gelöst, bei dem das Kraftübertragungselement mit der wenigstens teilweise darauf aufgeschobenen Gleithülse axial verpresst wird, so dass das Rohr auf einen Stützkörper des Fittings aufgeformt wird, und bei dem sich dem axialen Pressvorgang ein radial einwärtiger Pressvorgang anschließt, durch den die Gleithülse in das Kraftübertragungselement wenigstens abschnittsweise eingeformt wird, so dass eine axiale Bewegung der Gleithülse relativ zu dem Kraftübertragungselement nach den Pressvorgängen gehemmt ist.

Durch den radial einwärtigen Pressvorgang lässt sich insbesondere ein verringerter Verpressweg realisieren. Dies verringert vorteilhaft die Anforderungen an die Größe des Montageraums, welcher für die Herstellung der unlösbaren Werkstückverbindung zur Verfügung stehen muss. Mit dem erfindungsgemäßen Verfahren ist es damit möglich, Interaktionsflächen der Werkstücke, beispielsweise die Außenumfangsfläche des Übertragungsabschnitt des Kraftübertragungselements oder die Innenumfangsfläche der Gleithülse mit nahezu beliebigen Neigewinkeln zur Mittelachse auszubilden, wobei insbesondere vergleichsweise hohe Neigewinkel bevorzugt sind, welche es erlauben, die äußeren geometrischen Abmessungen, insbesondere des Kraftübertragungselements und der Gleithülse weniger weitgreifend zu wählen. Trotz dieser Modifikation können diese Werkstücke verwendet werden, um stabile und dauerhaft dichte unlösbare Werkstückverbindungen zu schaffen.

In einer vorteilhaften Ausführungsform des Verfahrens kann ein Fitting, welches einen ein Profil aufweisenden Stützkörper und einen Grundkörper aufweist, verwendet werden, wobei das Rohr in das Profil des Stützkörpers eingeformt wird. Durch das Vorsehen eines Profils können insbesondere die Beständigkeit und Stabilität einer kraft- gegebenenfalls auch formschlüssigen Werkstückverbindung des Rohrs mit dem Stützkörper des Fittings gefördert werden. Auch die Dichteigenschaften können beispielsweise durch eine von dem Profil bewirkte Labyrinthdichtung weiter begünstigt werden.

Es kann ein Kraftübertragungselement verwendet werden, welches einen Flanschabschnitt und einen Übertragungsabschnitt aufweist, wobei das dem Flanschabschnitt proximale Ende des Übertragungsabschnitts an der Außenumfangsfläche wenigstens eine Rastvertiefung aufweist und wobei die Gleithülse wenigstens abschnittsweise in die Rastvertiefung eingeformt wird. Auf diese Weise kann weitgehend vermieden werden, dass während des radial einwärtigen Pressvorgangs und damit auch Umformvorgangs Material des Übertragungsabschnitts des Kraftübertragungselements zu verdrängen bzw. komprimieren ist. Das Verfahren kann dementsprechend einfacher ausgeführt werden. Insbesondere können die zur Verpressung erforderlichen Kräfte reduziert werden.

In einer weiteren vorteilhaften Ausführungsform des Verfahrens wird eine Gleithülse verwendet, welche ein erstes Ende mit einer im Querschnitt bestimmten Dicke und ein zweites, gegenüber dem ersten Ende im Querschnitt verjüngtes Ende aufweist, wobei wenigstens ein radial einwärts ausgreifender Rastvorsprung angeordnet ist. Durch eine derartige Ausgestaltung der Gleithülse wird das Aufsetzen der Gleithülse auf das Kraftübertragungselement vereinfacht.

In einer weiteren vorteilhaften Ausführungsform des Verfahrens kann ein Kraftübertragungselement, welches an der Außenumfangsfläche zwischen der Rastvertiefung und dem distalen Ende des Übertragungsabschnitts wenigstens ein Mittel zum temporären Fixieren einer Gleithülse aufweist, sowie eine Gleithülse, welche ein erstes Ende mit einer im Querschnitt bestimmten Dicke und ein zweites, gegenüber dem ersten Ende im Querschnitt verjüngtes Ende aufweist, wobei an der Innenumfangsfläche des verjüngten Endes wenigstens ein radial einwärts ausgreifender Rastvorsprung angeordnet ist, verwendet werden, wobei die Gleithülse mit ihrem verjüngten Ende auf den Übertragungsabschnitt aufgeschoben wird, bis die mit dem Mittel zum temporären Fixieren einer Gleithülse in Anlage liegt und die Gleithülse von dem Mittel zum temporären Fixieren einer Gleithülse temporär fixiert wird. Durch den Eingriff des Rastvorsprungs in die Haltevertiefung - bevor der eigentliche Pressvorgang erfolgt - wird insbesondere eine stabile Zwischenposition geschaffen, in welcher die einzelnen Werkstücke relativ fest zueinander positioniert sind. Dem Installateur kann somit, ohne dass er eine Verstellung der Positionen zu befürchten braucht, Gelegenheit gegeben werden, die Ausrichtungen der zu verpressenden Werkstücke zu überprüfen, bevor der erste Pressvorgang eingeleitet wird.

Es ist möglich, für das Verfahren eine Gleithülse zu verwenden, bei welcher das verjüngte Ende radial auswärts abgewinkelt ist, und bei dem das abgewinkelte Ende während des radial einwärtigen Pressvorgangs mit der Außenumfangsfläche des Flanschabschnitts in eine weitgehend fluchtende Ausrichtung geformt wird. Somit kann im Ergebnis eine kompakte unlösbare Werkstückverbindung erreicht werden, welche wenig Raum in Anspruch nimmt.

Ferner können das Kraftübertragungselement und die darauf aufgeschobene Gleithülse axial verpresst werden, wobei der Rastvorsprung in eine der Rastvertiefung gegenüberliegende Position gebracht wird.

Dem axialen Pressvorgang kann sich ein radial einwärtiger Pressvorgang anschließen, bei dem der Rastvorsprung mit der Rastvertiefung in Eingriff gebracht wird. Somit kann axialen Bewegungen der Gleithülse relativ zu dem Kraftübertragungselement vorgebeugt werden.

Das Verfahren kann so ausgeführt werden, dass zunächst das Kraftübertragungselement, dann die Gleithülse und schließlich das Rohr an dem Fitting positioniert werden.

Es ist aber gleichfalls möglich, zunächst das Kraftübertragungselement und die Gleithülse an dem Rohr zu positionieren, bevor diese Zwischenanordnung auf das Fitting aufgeschoben wird. Das Verfahren lässt sich demnach auf unterschiedliche Art und Weise durchführen.

In einer weiteren vorteilhaften Ausführungsform des Verfahrens, weist das Kraftübertragungselement an der Außenumfangsfläche zwischen der Rastvertiefung und dem distalen Ende des Übertragungsabschnittes wenigstens eine Haltevertiefung auf und die Gleithülse wird mit ihrem verjüngen Ende auf den Übertragungsabschnitt aufgeschoben, bis der Rastvorsprung in einer Zwischenposition in die Haltevorrichtung eingreift. Die Ausgestaltung des Mittels zum temporären Fixieren einer Gleithülse als Haltevertiefung ist zuverlässig und besonders einfach herzustellen.

Hinsichtlich weiterer Vorteile bzw. Merkmale des erfindungsgemäßen Verfahrens wird auf die obigen Ausführungen zu den Erzeugnissen verwiesen.

Es gibt nun eine Vielzahl von Möglichkeiten die erfindungsgemäße Anordnung sowie das erfindungsgemäße Verfahren zur Herstellung einer unlösbaren Werkstückverbindung auszugestalten und weiterzubilden. Hierzu wird auf die den unabhängigen Patentansprüchen nachgeordneten abhängigen Patentansprüche verwiesen. In der Zeichnung zeigt:
- Fig. 1: ein Fitting, ein Rohr sowie Ausführungsbeispiele eines Kraftübertragungselements und einer Gleithülse in einer Querschnittsansicht,
- Fig. 2: das Fitting, das Rohr sowie die Ausführungsbeispiele des Kraftübertragungselements und der Gleithülse in einer Querschnittsansicht, wobei das Kraftübertragungselement an dem Fitting positioniert ist,
- Fig. 3: die Anordnung gemäß der vorliegenden Erfindung sowie das Rohr in einer Querschnittsansicht, wobei die Gleithülse an dem Kraftübertragungselement in einer Zwischenposition positioniert ist,
- Fig. 4: das Fitting, das Rohr sowie die Ausführungsbeispiele des Kraftübertragungselements und der Gleithülse in einer Querschnittsansicht, wobei das Rohr zwischen dem Fitting und dem Kraftübertragungselement eingeführt ist und wobei zunächst eine axiale Verpressung ausgeführt wird,
- Fig. 5a-b: das Fitting, das Rohr sowie die Ausführungsbeispiele des Kraftübertragungselements und der Gleithülse in einer Querschnittsansicht, bevor nach der Durchführung der axialen Verpressung ein radial einwärtiger Pressvorgang vorgenommen wird,
- Fig. 6a-b: das Fitting, das Rohr sowie die Ausführungsbeispiele des Kraftübertragungselements und der Gleithülse in einer Querschnittsansicht nach Beendigung des radial einwärtigen Pressvorgangs,
- Fig. 7: ein Fitting, ein Rohr sowie weitere Ausführungsbeispiele eines Kraftübertragungselements und einer Gleithülse in einer Querschnittsansicht,
- Fig. 8: ein weiteres Ausführungsbeispiel einer Anordnung gemäß der vorliegenden Erfindung sowie das Rohr in einer Querschnittsansicht, wobei die Gleithülse an dem Kraftübertragungselement in einer Zwischenposition positioniert ist, und

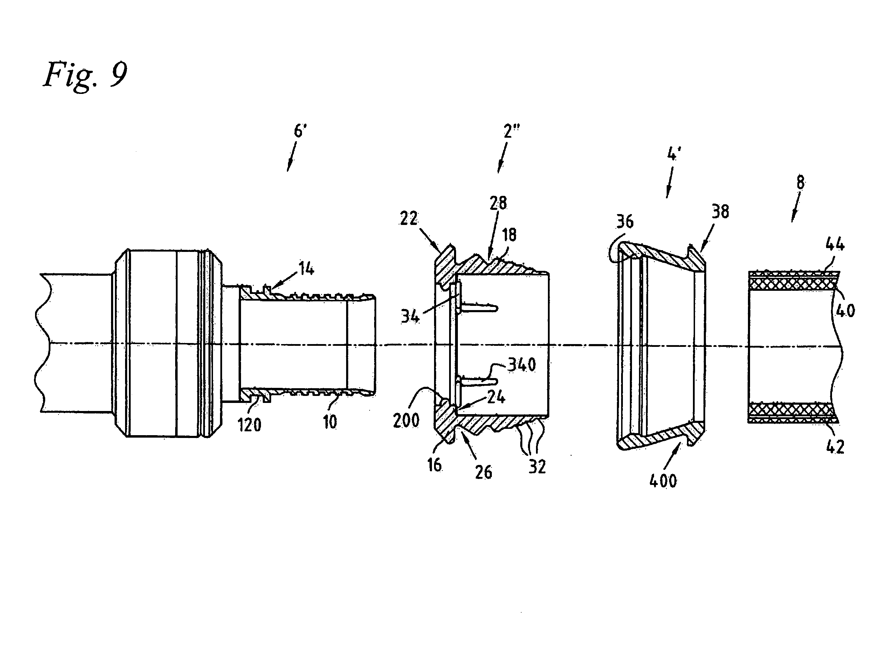

- Fig. 9: weitere beispielhafte Varianten der Werkstücke, die nicht zur Erfindung gehören.

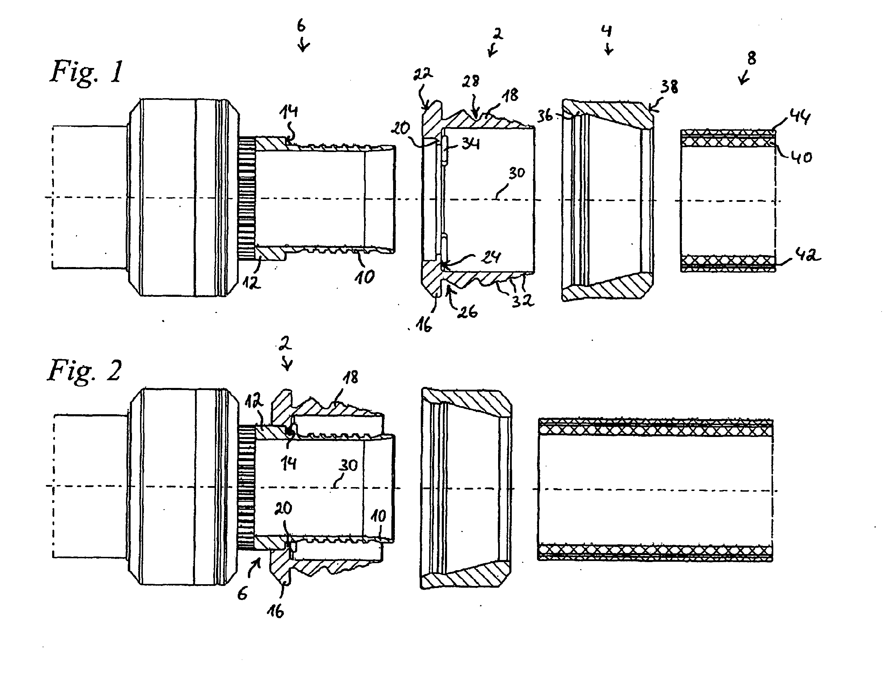

Im Folgenden wird unter Bezugnahme auf die Fig. 1 bis 6b beispielhaft ein Verfahren zur Herstellung einer unlösbaren Werkstückverbindung gemäß der vorliegenden Erfindung erläutert, in welchem ein Ausführungsbeispiel des Kraftübertragungselements 2 sowie der Gleithülse 4 Verwendung finden.

Fig. 1 zeigt in einer Querschnittsansicht vier Werkstücke: ein Fitting 6, ein Kraftübertragungselement 2, eine Gleithülse 4 und ein Rohr 8.

Das Fitting 6 weist einen ein Profil aufweisenden Stützkörper 10 auf. Der Stützkörper 10 erstreckt sich in diesem Beispiel von einem Grundkörper 12. Das Fitting 6 weist ferner an der Übergangsstelle vom Grundkörper 12 zum Stützkörper 10 eine in axialer Richtung gewandte Stoßfläche 14 auf. Das Profil besteht in diesem speziellen Beispiel aus sieben ringförmig umlaufenden Nuten, welche durch sechs dazwischen angeordnete, ringförmig umlaufende Trennstege voneinander abgegrenzt sind. Die Innenumfangsfläche des Stützkörpers 10 ist im Wesentlichen zylinderförmig ausgebildet, wobei jedoch die Stützkörperwand an dem dem Grundkörper 12 distalen Ende des Stützkörpers 10 radial auswärts leicht angeschrägt ist, um den Querschnittsübergang stetig zu gestalten.

Dem Fitting 6 in Fig. 1 vorgeordnet ist ein Kraftübertragungselement 2. Das Kraftübertragungselement 2 weist in diesem speziellen Beispiel einen dem Fitting 6 zugewandten Flanschabschnitt 16 und einen Übertragungsabschnitt 18 auf. An der Innenumfangsfläche weist der Flanschabschnitt 16 in diesem Ausführungsbeispiel ein radial einwärts ausgreifendes Anlageelement 20 auf. In dem in Fig. 1 gezeigten Ausführungsbeispiel des Kraftübertragungselements 2 ist an der Außenumfangsfläche des Flanschabschnitts 16 an der Stirnseite darüber hinaus eine Fase 22 angeordnet, welche als Interaktionsfläche mit einem Presswerkzeug (nicht gezeigt) dienen kann. Ferner weist der Flanschabschnitt 16 an seinem radial einwärts ausgreifenden Bereich eine in axialer Richtung gewandte Stoßfläche 24 auf, an welcher die Stirnfläche eines Rohrs 8 in Anlage kommen kann. Die Innenumfangsfläche des Flanschabschnitts 16 kann als Mehrkant (nicht dargestellt) ausgebildet sein. Auf diese Weise kann in der Wechselwirkung mit der der Innenumfangsfläche des Flanschabschnitts 16 gegenüberliegenden Außenumfangsfläche des Fittinggrundkörpers 12, an welchem das Kraftübertragungselement 2 zu positionieren ist, eine zusätzliche Sicherung gegen unerwünschte Drehbewegungen des Kraftübertragungselements 2 relativ zu dem Fitting 6 erreicht werden.

Der Übertragungsabschnitt 18 des Kraftübertragungselements 2 weist eine sich von dem dem Flanschabschnitt 16 proximalen Ende bis zu dem dem Flanschabschnitt 16 distalen Ende wenigstens abschnittsweise verjüngende Wanddicke auf. Dies ist so zu verstehen, dass die Verjüngung, also die Wandstärkenabnahme zwar durch Formelemente wie einer in diesem Beispiel an dem dem Flanschabschnitt 16 proximalen Ende des Übertragungsabschnitts 18 angeordneten Rastvertiefung 26, welche ringförmig umlaufend ist, sowie einer in diesem Beispiel zwischen der Rastvertiefung 26 und dem dem Flanschabschnitt 16 distalen Ende angeordneten ringförmig umlaufenden Haltevertiefung 28 modifiziert wird, aber in der Tendenz bestehen bleibt. Die Verjüngung bzw. Wandstärkenabnahme kann somit durch eine gedachte Linie (nicht gezeigt), welche durch die am weitesten radial auswärts liegenden Abschnitte des Übertragungsabschnitts 18 verläuft, beispielsweise in der Art einer Einhüllenden, repräsentiert werden. In diesem speziellen Ausführungsbeispiel erfolgt die Wandstärkenabnahme wenigstens abschnittsweise mittels Ausbildung einer Kegelsegmentfläche, welche unter einem Winkel von etwa 15° gegen die Mittelachse 30 des Kraftübertragungselements 2 geneigt ist. Es ist jedoch auch möglich, einen Winkel bis zu 75° zu wählen.

An der Außenumfangsfläche des Übertragungsabschnitts 18 sind in diesem Beispiel zwischen der Haltevertiefung 28 und dem distalen Ende drei Vertiefungen 32 zur Verringerung der Kontaktfläche angeordnet. Die Vertiefungen 32 nehmen in diesem Beispiel die Form von ringförmig umlaufenden Rillen an, können aber beispielsweise auch als Riffelung ausgebildet werden.

In dem Bereich des dem Flanschabschnitt 16 proximalen Endes des Übertragungsabschnitts 18 des Kraftübertragungselements 2 sind in diesem Beispiel zwei Öffnungen 34 angeordnet, welche eine im Wesentlichen in Umfangsrichtung verlaufende Erstreckung aufweisen. Die Öffnungen 34 ermöglichen einem Installateur eine visuelle Kontrolle der Position der Werkstücke 2, 4, 6, 8 vor und gegebenenfalls nach dem Pressvorgang. Die Öffnungen 34 können natürlich auch eine andere Form aufweisen bzw. an einer anderen Stelle angeordnet sein. Auch die Anzahl der Öffnungen 34 kann grundsätzlich frei gewählt werden.

Als Drehsicherung kann eine Ausbildung der Innenumfangsfläche des Übertragungsabschnitts 18 als Mehrkant (nicht gezeigt) vorgesehen sein.

Weiterhin zeigt Fig. 1 eine Gleithülse 4, deren erstes Ende im Querschnitt, also in der Querschnittsansicht eine bestimmte Dicke aufweist, und deren zweites Ende gegenüber dem ersten Ende im Querschnitt verjüngt ist. Der Außendurchmesser der Gleithülse 4 ist über die Außenumfangsfläche in axialer Richtung wenigstens abschnittsweise konstant. Dies bedeutet insbesondere, dass Formmerkmale mit geringer räumlicher Abmessung vorgesehen sein können, welche die Konstanz des Außendurchmessers modifizieren. In diesem speziellen Beispiel erfolgt eine Modifikation dadurch, dass das verjüngte Ende der Gleithülse 4 radial auswärts leicht abgewinkelt ist. Es ist aber auch möglich, die Gleithülse 4 mit einem über die gesamte axiale Erstreckung der Gleithülse 4 konstanten Außendurchmesser auszubilden. Ferner ist an der Innenumfangsfläche des verjüngten Endes ein radial einwärts ausgreifender Rastvorsprung 36 angeordnet, welcher in diesem Beispiel ringförmig umlaufend ist. Die Innenumfangsfläche der Gleithülse 4 weist wenigstens abschnittsweise Hohlkegelsegmentform auf. An der Außenumfangsfläche der Gleithülse 4 ist an dem nicht verjüngten Ende eine Fase 38 angeordnet, an welcher ein Presswerkzeug (nicht gezeigt) ansetzen kann.

Das letzte Werkstück in der in Fig. 1 dargestellten Aufstellung ist in diesem Ausführungsbeispiel ein Verbundrohr 8, welches drei Schichten 40, 42, 44 umfasst. Zum Beispiel kann die innere Schicht 40 aus einem vernetzten Polyethylen (PEX), die mittlere Schicht 42 aus einem Metall wie Aluminium und die äußere Schicht 44 aus einem insbesondere mechanischen Beanspruchungen widerstehenden oder auch ästhetischen Gesichtspunkten genügenden Kunststoff bestehen. Das in Fig. 1 gezeigte Verbundrohr 8 ist jedoch nur als Beispiel zu verstehen. Selbstverständlich könnte die in Fig. 1 gezeigte Aufstellung auch ein einschichtiges Rohr, beispielsweise aus einem Kunststoff oder einem Metall bzw. Metallwerkstoff umfassen. Auch der Querschnitt des Rohrs 8 ist grundsätzlich nicht beschränkt. Entscheidend ist, dass die relevanten Durchmesser der Werkstücke 2, 4, 6, 8, also der Außendurchmesser des Stützkörpers 10 des Fittings 6 und der Innendurchmesser des Rohrs 8 bzw. der Außendurchmesser des Rohrs 8 und der Innendurchmesser des Übertragungsabschnitts 18 des Kraftübertragungselements 2 füreinander geeignet bzw. aufeinander angepasst sind.

Die in Fig. 2 gezeigte Aufstellung unterscheidet sich von der in Fig. 1 dargestellten dadurch, dass das Kraftübertragungselement 2 auf das Fitting 6 aufgesteckt ist bzw. dass das Fitting 6 in das Kraftübertragungselement 2 eingreift. Der Flanschabschnitt 16 ist in diesem Beispiel über eine Presspassung, also einer reibschlüssigen Anlage an dem Fittinggrundkörper 12 fixiert und hemmt dadurch eine axiale Bewegung des Kraftübertragungselements 2 und des Fittings 6 zueinander. Die in axialer Richtung gewandte Stoßfläche 14 des Fittings 6 steht in diesem Beispiel mit dem an dem Flanschabschnitt 16 angeordneten Anlageelement 20 in Anlage. In dem in Fig. 2 gezeigten Ausführungsbeispiel wird der Fittinggrundkörper 12 im Wesentlichen von dem Flanschabschnitt 16 und der Stützkörper 10 im Wesentlichen von dem Übertragungsabschnitt 18 umgriffen, wobei das distale Ende des Stützkörpers 10 übertragungsabschnittseitig aus dem Kraftübertragungselement 2 herausragt. Diese Ausgestaltung ist jedoch nicht zwingend. Ebenso ist denkbar, dass das distale Ende des Stützkörpers 10 und das distale Ende des Übertragungsabschnitts 18 etwa in der gleichen Perpendikularebene zur Mittelachse 30 zu liegen kommen, oder dass das distale Ende des Übertragungsabschnitts 18 den Stützkörper 10 sogar überragt. Es können also verschiedene Ausgestaltungen gewählt werden.

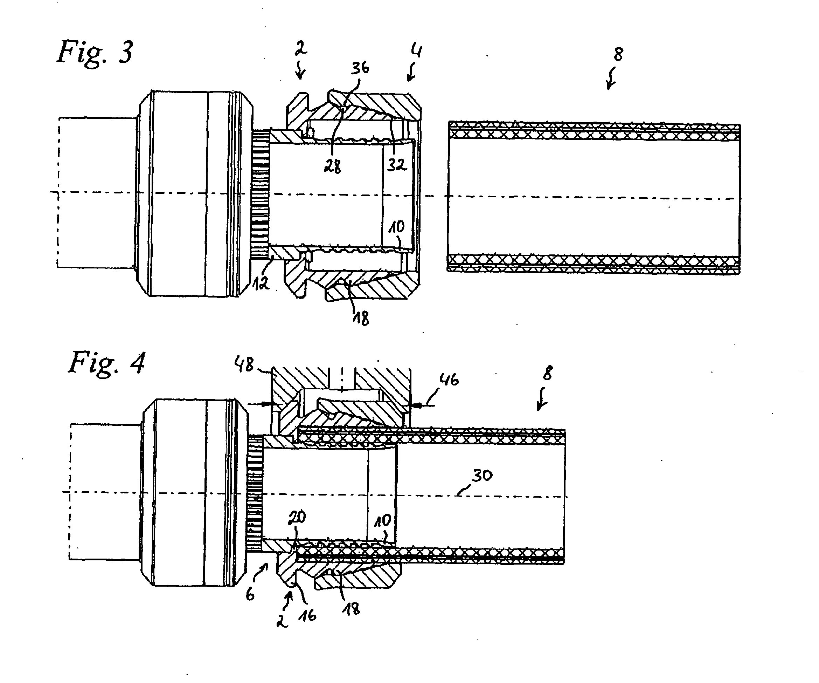

Die in Fig. 3 gezeigte erfindungsgemäße Anordnung unterscheidet sich von der in Fig. 2 dargestellten dadurch, dass die Gleithülse 4 übertragungsabschnittseitig auf das Kraftübertragungselement 2 aufgesteckt ist. Der an dem verjüngten Ende der Gleithülse 4 angeordnete Rastvorsprung 36 greift in die an der Außenumfangsfläche des Übertragungsabschnitts 18 angeordnete Haltevertiefung 28 ein, so dass in einer Zwischenposition - bevor die eigentlichen Pressvorgänge eingeleitet werden - einer Bewegung der Gleithülse 4 von dem Kraftübertragungselement 2 herunter vorgebeugt wird. Die anderen Abschnitte der Innenumfangsfläche der Gleithülse 4 und der zwischen der Haltevertiefung 28 und dem distalen Ende gelegene Abschnitt des Übertragungsabschnitts 18 sind vorzugsweise aufeinander angepasst und sind zumindest abschnittsweise - abgesehen von den Vertiefungen 32 zur Verringerung der Kontaktfläche - in einer reibschlüssigen Anlage.

Fig. 3 zeigt somit eine erfindungsgemäße Anordnung zur Herstellung einer unlösbaren Werkstückverbindung, wie sie ein Installateur im Handel erwerben kann, und welche nur noch um ein zu verpressendes Rohr 8 zu ergänzen ist, um die Verpressung vornehmen zu können.

Fig. 4 zeigt die aus den Fig. 1 bis 3 bekannte Aufstellung, bei der das Rohr 8 in den Hohlraum zwischen dem Stützkörper 10 des Fittings 6 und dem Übertragungsabschnitt 18 des Kraftübertragungselements 2 eingeführt ist. Die Stirnfläche des Rohrs 8 ist bis zum Anschlag an den Flanschabschnitt 16 bzw. das an dem Flanschabschnitt 16 angeordnete Anlageelement 20 herangeschoben. Durch die am Übertragungsabschnitt 18 angeordneten Öffnungen 34 (nicht sichtbar) kann der Installateur in der in Fig. 4 gezeigten Aufstellung die ordnungsgemäße Position der Werkstücke 2, 4, 6, 8 zueinander kontrollieren.

Um die Herstellung der unlösbaren Werkstückverbindung einzuleiten, können nun an den durch die in Fig. 4 dargestellten, parallel zur Mittelachse 30 verlaufenden Pfeile 46, beispielsweise unter Einsatz eines Presswerkzeugs 48 (hier einseitig dargestellt), die axialen Presskräfte ausgeübt werden.

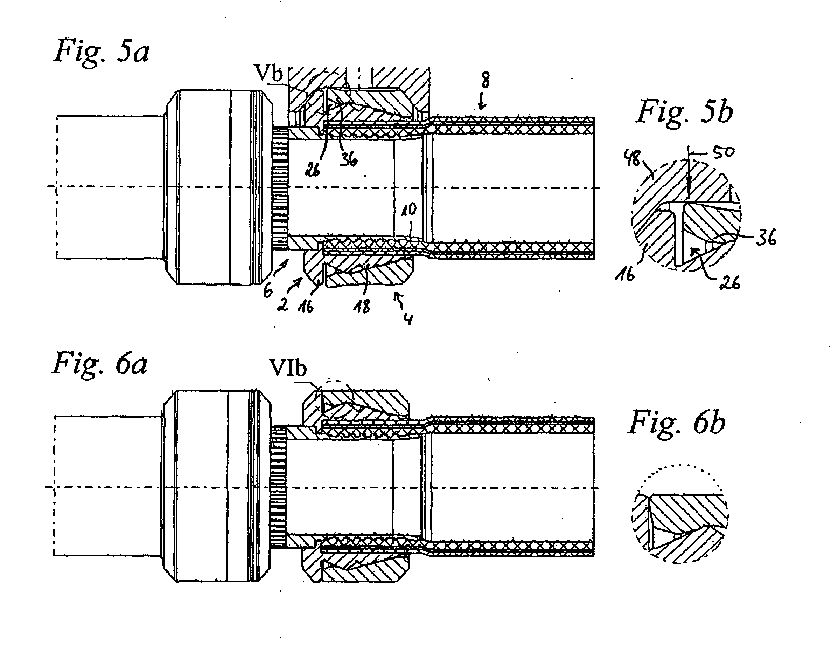

Das Ergebnis des axialen Pressvorgangs ist in Fig. 5a gezeigt. Durch die Ausübung der Presskräfte wird die Gleithülse 4 über den Übertragungsabschnitt 18 in axialer Richtung auf den Flanschabschnitt 16 zu bewegt. Durch die Neigung des Abschnitts der Innenumfangsfläche der Gleithülse 4 und der korrespondierenden Abschnitte der Außenumfangsfläche des Übertragungsabschnitts 18 wird die in diesem speziellen Ausführungsbeispiel in axialer Richtung ausgeübte Dynamik der Pressbewegung zumindest teilweise in radial einwärtig wirkende Presskräfte umgelenkt. Der Übertragungsabschnitt 18 überträgt die Presskräfte auf das Rohr 8, welches radial einwärts so umgeformt wird, dass die durch die Trennstege separierten Nuten am Stützkörper 10 des Fittings 6 das verdrängte Material des Rohrs 8 aufnehmen, und somit ein Kraft- und Formschluss entstehen kann, welcher die Dichtheit der unlösbaren Werkstückverbindung gewährleistet. In der vorläufigen Endposition nach dem axialen Pressvorgang liegt der Rastvorsprung 36 der Gleithülse 4 der Rastvertiefung 26 des Übertragungsabschnitts 18 gegenüber, wobei jedoch ein Abschnitt des Rastvorsprungs 36 mit einer Wand der Rastvertiefung 26 so in Kontakt stehen kann, dass eine axiale Bewegung der Gleithülse 4 nach dem axialen Pressvorgang von dem Kraftübertragungselement 2 herunter gehemmt ist.

Wie in der Vergrößerung der Fig. 5b gezeigt ragt das verjüngte Ende der Gleithülse 4 nach dem axialen Pressvorgang leicht über die von der Außenumfangsfläche des Flanschabschnitts 16 definierte Ebene radial auswärts leicht hervor und bietet somit einem Presswerkzeug 48 einen günstigen Ansatzpunkt für eine radial einwärtige Pressbewegung (Pfeil 50). Somit schließt sich dem axialen Pressvorgang ein radial einwärtiger Pressvorgang an, wodurch ein Abschnitt der Gleithülse 4, in diesem Beispiel das verjüngte Ende der Gleithülse 4, an dessen Innenumfangsfläche der Rastvorsprung 36 angeordnet ist, in die Rastvertiefung 26 eingeformt wird und somit eine stabile Verrastung der Gleithülse 4 mit dem Kraftübertragungselement 2 bewirkt. Dadurch kann dem Umstand entgegen gewirkt werden, dass sich die Gleithülse 4 von dem Kraftübertragungselement 2, beispielsweise auf Grund von durch Temperaturänderungen ausgelöste Materialausdehnungen bzw. -kontraktionen wieder löst, was Undichtigkeiten zur Folge haben könnte.

Fig. 6a zeigt noch einmal die vier Werkstücke 2, 4, 6, 8, nach dem sowohl der axiale als auch der radial einwärtige Pressvorgang abgeschlossen und die unlösbare Werkstückverbindung damit hergestellt sind. Wie in der Vergrößerung der Fig. 6b zu sehen, ist das abgewinkelte Ende der Gleithülse 4 während des radial einwärtigen Pressvorgangs mit der Außenumfangsfläche des Flanschabschnitts 16 in eine weitgehend fluchtende Ausrichtung geformt. Auf diese Weise kann die unlösbare Werkstückverbindung sehr kompakt ausgestaltet werden.

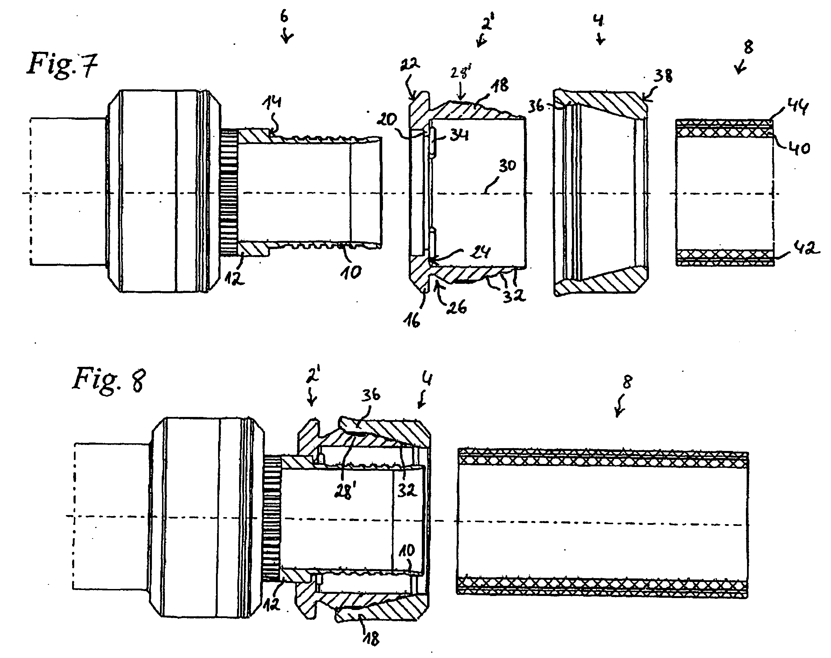

Fig. 7 zeigt in einer Querschnittsansicht vier Werkstücke: ein Fitting 6, ein Kraftübertragungselement 2', eine Gleithülse 4 und ein Rohr 8. Die den Teilen aus Fig. 1 entsprechenden Teile sind mit denselben Bezugszeichen gekennzeichnet. Das Kraftübertragungselement 2' weist ein Mittel 28' zur temporären Fixierung einer Gleithülse auf. Das Mittel 28' können beispielsweise als eine zum Reibschluss mit der Gleithülse 4 geeignete Fläche, als Klebefläche, als Gewinde oder als zum Form- und/oder Reibschluss geeignete Vertiefung ausgebildet sein. Im Falle eines Gewindes kann auch die Gleithülse im Bereich des Rastvorsprungs 36 mit einem entsprechenden Gegengewinde ausgestaltet sein.

Fig. 8 zeigt eine erfindungsgemäße Anordnung zur Herstellung einer unlösbaren Werkstückverbindung aus den in Fig. 7 gezeigten Bauteilen, wie sie ein Installateur im Handel erwerben kann, und welche nur noch um ein zu verpressendes Rohr 8 zu ergänzen ist, um die Verpressung vornehmen zu können.

Das in den Fig. 7 und 8 gezeigte Kraftübertragungselement 2' kann alternativ auch kein Mittel 28' zur temporären Fixierung einer Gleithülse aufweisen.

## Patentansprüche

1. Anordnung zur Herstellung einer unlösbaren Werkstückverbindung,
- mit einem Fitting (6), welches einen ein Profil aufweisenden Stützkörper (10) und einen Grundkörper (12) aufweist,
- mit einem Kraftübertragungselement (2, 2'), welches einen Flanschabschnitt (16) und einen Übertragungsabschnitt (18) mit im Wesentlichen zylinderförmiger Innenumfangsfläche aufweist, wobei die Wanddicke des Übertragungsabschnitts (18) sich von dem dem Flanschabschnitt (16) proximalen Ende bis zu dem dem Flanschabschnitt (16) distalen Ende wenigstens abschnittsweise verjüngt, und
- mit einer Gleithülse (4), welche ein erstes Ende mit einer im Querschnitt bestimmten Dicke und ein zweites, gegenüber dem ersten Ende im Querschnitt verjüngtes Ende aufweist, wobei der Außendurchmesser über die Außenumfangsfläche in axialer Richtung wenigstens abschnittsweise konstant ist,
**dadurch gekennzeichnet,**
- **dass** das dem Flanschabschnitt (16) proximale Ende des Übertragungsabschnitts (18) des Kraftübertragungselements (2, 2') an der Außenumfangsfläche wenigstens eine Rastvertiefung (26) aufweist,
- **dass** an der Innenumfangsfläche des verjüngten Endes der Gleithülse (4) wenigstens ein radial einwärts ausgreifender Rastvorsprung (36) angeordnet ist und
- **dass** das Kraftübertragungselement (2, 2') den Stützkörper (10) und wenigstens teilweise den Grundkörper (12) umgreift.

2. Anordnung nach Anspruche 1,
**dadurch gekennzeichnet,**
- **dass** an der Außenumfangsfläche zwischen der Rastvertiefung (26) und dem distalen Ende des Übertragungsabschnitts (18) wenigstens ein Mittel (28') zum temporären Fixieren einer Gleithülse angeordnet ist,
- **dass** die Gleithülse (4) mit dem verjüngten Ende auf den Übertragungsabschnitt (18) so weit aufgeschoben ist, dass die Gleithülse (4) mit dem Mittel (28') zum temporären Fixieren einer Gleithülse in Anlage liegt und
- **dass** die Gleithülse (4) durch das Mittel (28') zum temporären Fixieren einer Gleithülse am Übertragungsabschnitt temporär fixiert ist.

3. Anordnung nach einem der Ansprüche 1 bis 2,
**dadurch gekennzeichnet,**
- **dass** an der Außenumfangsfläche zwischen der Rastvertiefung (26) und dem distalen Ende des Übertragungsabschnitts (18) wenigstens eine Haltevertiefung (28, 28') angeordnet ist und
- **dass** die Gleithülse (4) mit dem verjüngten Ende auf den Übertragungsabschnitt (18) so weit aufgeschoben ist, dass der Rastvorsprung (36) in die Haltevertiefung (28, 28') eingreift.

4. Anordnung nach einem der Ansprüche 1 bis 3,
**dadurch gekennzeichnet,**
**dass** der Flanschabschnitt (16) an dem Grundkörper (12) fixiert ist, wobei insbesondere ein Anlageelement (20) des Flanschabschnitts (16) an einer in axialer Richtung gewandten Stoßfläche (14) des Grundkörpers (12) anliegt.

5. Verfahren zur Herstellung einer unlösbaren Werkstückverbindung zwischen einem Fitting (6), einem Rohr (8), einem Kraftübertragungselement (2, 2') und einer Gleithülse (4),
- bei dem das Kraftübertragungselement (2, 2') mit der wenigstens teilweise darauf aufgeschobenen Gleithülse (4) axial verpresst wird, so dass das Rohr (8) auf einen Stützkörper (10) des Fittings (6) aufgeformt wird, **dadurch gekennzeichnet,**
- **dass** sich dem axialen Pressvorgang ein radial einwärtiger Pressvorgang anschließt, durch den die Gleithülse (4) in das Kraftübertragungselement (2, 2') wenigstens abschnittsweise eingeformt wird, so dass eine axiale Bewegung der Gleithülse (4) relativ zu dem Kraftübertragungselement (2, 2') nach den Pressvorgängen gehemmt ist.

6. Verfahren nach Anspruch 5,
bei dem ein Fitting (6), welches einen ein Profil aufweisenden Stützkörper (10) und einen Grundkörper (12) aufweist, verwendet wird, wobei das Rohr (8) in das Profil des Stützkörpers (10) eingeformt wird.

7. Verfahren nach Anspruch 5 oder 6,
bei dem ein Kraftübertragungselement (2, 2'), welches einen Flanschabschnitt (16) und einen Übertragungsabschnitt (18) aufweist, wobei das dem Flanschabschnitt (16) proximale Ende des Übertragungsabschnitts (18) an der Außenumfangsfläche wenigstens eine Rastvertiefung (26) aufweist, verwendet wird, und bei dem die Gleithülse (4) wenigstens abschnittsweise in die Rastvertiefung (26) eingeformt wird.

8. Verfahren nach Anspruch 7,
bei dem eine Gleithülse (4), welche ein erstes Ende mit einer im Querschnitt bestimmten Dicke und ein zweites, gegenüber dem ersten Ende im Querschnitt verjüngtes Ende aufweist, wobei an der Innenumfangsfläche des verjüngten Endes wenigstens ein radial einwärts ausgreifender Rastvorsprung (36) angeordnet ist, verwendet wird.

9. Verfahren nach einem der Ansprüche 7 bis 8,
**dadurch gekennzeichnet,**
- **dass** das Kraftübertragungselement (2, 2') an der Außenumfangsfläche zwischen der Rastvertiefung (26) und dem distalen Ende des Übertragungsabschnitts (18) wenigstens ein Mittel (28') zum temporären Fixieren einer Gleithülse aufweist,
- **dass** die Gleithülse (4) mit ihrem verjüngten Ende auf den Übertragungsabschnitt (18) aufgeschoben wird, bis die Gleithülse (4) mit dem Mittel (28') zum temporären Fixieren einer Gleithülse in Anlage liegt und
- **dass** die Gleithülse (4) von dem Mittel (28') zum temporären Fixieren einer Gleithülse temporär fixiert wird.

10. Verfahren nach einem der Ansprüche 7 bis 9,
**dadurch gekennzeichnet,**
- **dass** das Kraftübertragungselement (2, 2') an der Außenumfangsfläche zwischen der Rastvertiefung (26) und dem distalen Ende des Übertragungsabschnitts (18) wenigstens eine Haltevertiefung (28, 28') aufweist und
- **dass** die Gleithülse (4) mit ihrem verjüngten Ende auf den Übertragungsabschnitt (18) aufgeschoben wird, bis der Rastvorsprung (36) in einer Zwischenposition in die Haltevertiefung (28, 28') eingreift.

11. Verfahren nach einem der Ansprüche 7 bis 10,
bei dem eine Gleithülse (4) verwendet wird, bei welcher das verjüngte Ende radial auswärts abgewinkelt ist, und bei dem das abgewinkelte Ende während des radial einwärtigen Pressvorgangs mit der Außenumfangsfläche des Flanschabschnitts (18) in eine weitgehend fluchtende Ausrichtung geformt wird.

12. Verfahren nach einem der Ansprüche 7 bis 11,
bei dem das Kraftübertragungselement (2, 2') und die darauf aufgeschobene Gleithülse (4) axial verpresst werden, wobei der Rastvorsprung (36) in eine der Rastvertiefung (26) gegenüberliegende Position gebracht wird.

13. Verfahren nach einem der Ansprüche 7 bis 12,
bei dem sich dem axialen Pressvorgang ein radial einwärtiger Pressvorgang anschließt, bei dem der Rastvorsprung (36) mit der Rastvertiefung (26) in Eingriff gebracht wird.

## Claims

1. Arrangement for producing a non-detachable workpiece connection,
- with a fitting (6) having a support body (10) having a profile and a base body (12),
- with a force-transmitting element (2, 2'), having a flange portion (16) and a transmitting portion (18) with a substantially cylindrical inner peripheral surface, wherein the wall thickness of the transmitting portion (18) tapers at least in sections from the end close to the flange portion (16) to the end remote from the flange portion (16), and
- with a sliding sleeve (4) having a first end, which has a certain section thickness, and a second end which, compared to the first end, has a tapered section, wherein the external diameter across the outer peripheral surface in the axial direction is constant at least in sections,
**characterised in that**
- the end of the transmitting portion (18) of the force-transmitting element (2, 2') near to the flange portion (16) on the outer peripheral surface has at least one latching depression (26),
- on the inner peripheral surface of the tapered end of the sliding sleeve (4) at least one radially inward reaching latching projection (36) is arranged and
- the force-transmitting element (2, 2') encompasses the support body (10) and at least in part the base body (12).

2. Arrangement according to claim 1,
**characterised in that**
- on the outer peripheral surface between the latching depression (26) and the remote end of the transmitting portion (18) at least one means (28') for temporary fixing of a sliding sleeve is arranged,
- the sliding sleeve (4) with the tapered end is pushed onto the transmitting portion (18) far enough that the sliding sleeve (4) comes into contact with the means (28') for temporary fixing of a sliding sleeve and
- the sliding sleeve (4) is temporarily fixed on the transmitting portion by the means (28') for temporary fixing of a sliding sleeve.

3. Arrangement according to one of claims 1 to 2, **characterised in that**
- on the outer peripheral surface between the latching depression (26) and the remote end of the transmitting portion (18) at least one retaining depression (28, 28') is arranged and
- the sliding sleeve (4) with the tapered end is pushed onto the transmitting portion (18) far enough that the latching projection (36) engages in the retaining depression (28, 28').

4. Arrangement according to one of claims 1 to 3, **characterised in that**
the flange portion (16) is fixed to the base body (12), wherein in particular a contact element (20) of the flange portion (16) contacts with an abutment surface (14) of the base body (12) turned in an axial direction.

5. Method for producing a non-detachable workpiece connection between a fitting (6), a pipe (8), a force-transmitting element (2, 2') and a sliding sleeve (4),
- in which the force-transmitting element (2, 2') with the sliding sleeve (4) pushed onto it at least in part is axially pressed so that the pipe (8) is molded onto a support body (10) of the fitting (6),
**characterized in that**
- the axial pressing process is followed by a radially inward pressing process, through which the sliding sleeve (4) is at least in sections molded into the force-transmitting element (2, 2'), so that an axial movement of the sliding sleeve (4) relative to the force-transmitting element (2, 2') following the pressing processes is inhibited.

6. Method according to claim 5,
in which a fitting (6), having a base body (12) and a support body (10) having a profile , is used, wherein the pipe (8) is shaped within the profile of the support body (10).

7. Method according to claim 5 or 6,
in which a force-transmitting element (2, 2'), having a flange portion (16) and a transmitting portion (18), wherein the end of the transmitting portion (18) near to the flange portion (16) on the outer peripheral surface has at least one latching depression (26), is used, and in which the sliding sleeve (4) is at least in sections molded into the latching depression (26).

8. Method according to claim 7,
in which a sliding sleeve (4) having a first end with a section of a certain thickness and a second end with a tapered section compared with the first end, wherein on the inner peripheral surface of the tapered end at least one radially inward reaching latching projection (36) is arranged, is used.

9. Method according to one of claims 7 to 8,
**characterised in that**
- the force-transmitting element (2, 2') on the outer peripheral surface between the latching depression (26) and the remote end of the transmitting portion (18) has at least one means (28') for temporary fixing of a sliding sleeve,
- the sliding sleeve (4) with its tapered end is pushed onto the transmitting portion, until the sliding sleeve (4) comes into contact with the means (28') for temporary fixing of a sliding sleeve and
- the sliding sleeve (4) is temporarily fixed by the means (28') for temporary fixing of a sliding sleeve.

10. Method according to one of claims 7 to 9,
**characterised in that**
- the force-transmitting element (2, 2') on the outer peripheral surface between the latching depression (26) and the remote end of the transmitting portion (18) has at least one retaining depression (28, 28') and
- the sliding sleeve (4) with its tapered end is pushed onto the transmitting portion (18), until the latching projection (36) engages in an intermediate position in the retaining depression (28, 28').

11. Method according to one of claims 7 to 10,
in which a sliding sleeve (4) is used, in which the tapered end is angled radially outwards, and in which the angled end during the radially inward pressing process is shaped with the outer peripheral surface of the flange portion (18) in an extensively aligned orientation.

12. Method according to one of claims 7 to 11, in which the force-transmitting element (2, 2') and the sliding sleeve (4) pushed onto this are axially pressed, wherein the latching projection (36) is brought into a position opposite the latching depression (26).

13. Method according to one of claims 7 to 12, in which the axial pressing process is followed by a radially inward pressing process, in which the latching projection (36) is brought into engagement with the latching depression (26).

## Revendications

1. Ensemble pour la réalisation d'une liaison de pièces non détachable,
- avec une ferrure (6), qui est dotée d'un corps de support (10), présentant un profil, et d'un corps de base (12),
- avec un élément de transmission de force (2, 2'), qui est doté d'une section de bride (16) et d'une section de transmission (18) présentant une surface périphérique intérieure, sensiblement cylindrique, sachant que l'épaisseur de paroi de la section de transmission (18) s'amincit, au moins par endroits, de l'extrémité la plus proche de la section de bride (16) jusqu'à l'extrémité la plus éloignée de la section de bride (16), et
- avec une douille coulissante (4), qui est dotée d'une première extrémité, qui présente une section transversale d'une épaisseur déterminée, et d'une deuxième extrémité de section transversale amincie par rapport à la première extrémité, sachant que, quant à la surface périphérique, extérieure, le diamètre extérieur est constant dans la direction axiale, au moins par sections,
**caractérisé en ce que**
- l'extrémité de la section de transmission (18) de l'élément de transmission de force (2, 2') la plus proche de la section de bride (16) est dotée, sur la surface périphérique extérieure, d'au moins une cavité d'arrêt (26),
- sur la surface périphérique intérieure de l'extrémité amincie de la douille coulissante (4), est agencée au moins une saillie d'arrêt (36), qui s'enclenche radialement, vers l'intérieur, et
- l'élément de transmission de force (2, 2') enveloppe le corps de support (10) et, au moins partiellement, le corps de base (12).

2. Ensemble selon la revendication 1, **caractérisée en ce que**,
- sur la surface périphérique externe, entre la cavité d'arrêt (26) et l'extrémité distale de la section de transmission (18), est agencé un organe de fixation (28'), destiné à la fixation temporaire d'une douille coulissante,
- la douille coulissante (4) est glissée, avec l'extrémité amincie, sur la section de transmission (18), jusqu'à ce que la douille coulissante (4) se trouve en contact avec l'organe (28') destiné à la fixation temporaire d'une douille coulissante, et
- la douille coulissante (4) est fixée temporairement sur la section de transmission par l'organe (28') destiné à la fixation temporaire d'une douille coulissante.

3. Ensemble selon l'une des revendications 1 à 2, **caractérisé en ce que**,
- sur la surface périphérique, extérieure, entre la cavité d'arrêt (26) et l'extrémité distale de la section de transmission (18), est agencée au moins une cavité d'arrêt (28, 28') et
- la douille coulissante (4) est poussée, avec l'extrémité amincie, si loin, sur la section de transmission (18), que la saillie d'arrêt (36) s'engage dans la cavité d'arrêt (28, 28').

4. Ensemble selon l'une des revendications 1 à 3, **caractérisé en ce que** la section de bride (16) est fixée au corps de base (12), sachant que, tout particulièrement, un élément de contact (20) de la section de bride (16) porte contre une surface d'about (14) du corps de base (12), qui est orientée dans la direction axiale.

5. Procédé pour la réalisation d'une liaison de pièces non détachable, entre une ferrure (6), un tube (8), un l'élément de transmission de force (2, 2') et une douille coulissante (4),
- dans lequel l'élément de transmission de force (2, 2') est pressé avec la douille coulissante (4) au moins prévue, qui est glissée, au moins partiellement sur lui, de sorte que le tube (8) soit surmoulé sur un corps de support (10) de la ferrure (6),
**caractérisé en ce que**,
- le processus de pression axial est suivi d'un processus de compression radial, au moyen duquel la douille coulissante (4) est repoussée, au moins par sections, dans l'élément de transmission de force (2, 2'), de sorte qu'un déplacement axial de la douille coulissante (4) par rapport à l'élément de transmission de force (2, 2') soit entravé après le processus de compression.

6. Procédé selon la revendication 5, dans lequel on utilise une ferrure (6), qui est pourvue d'un corps de support (10), doté d'un profil, et d'un corps de base (12), sachant que le tube (8) est repoussé dans le profil du corps de support (10).

7. Procédé selon revendication 5 ou 6, dans lequel on utilise un élément de transmission de force (2, 2'), qui est doté d'une section de bride (16) et d'une section de transmission (18), sachant que l'extrémité de la section de transmission (18), la plus proche de la section de bride (16) est dotée d'au moins une cavité d'arrêt (26), et dans lequel la douille coulissante (4) est repoussée, au moins par sections, dans la cavité d'arrêt (26).

8. Procédé selon la revendication 7, dans lequel on utilise une douille coulissante (4), qui est dotée d'une première extrémité, qui présente une section transversale d'une épaisseur déterminée, et d'une deuxième extrémité de section transversale amincie par rapport à la première extrémité, sachant que, sur la surface périphérique, intérieure de l'extrémité amincie, est agencée au moins une saillie d'arrêt (36), qui s'enclenche radialement, vers l'intérieur

9. Procédé selon l'une des revendications 7 à 8, **caractérisé en ce que**
- l'élément de transmission de force (2, 2') est doté, sur la surface périphérique, extérieure, entre la cavité d'arrêt (26) et l'extrémité distale de la section de transmission (18), d'au moins un organe de fixation (28'), destiné à la fixation temporaire d'une douille coulissante,
- la douille coulissante (4) est glissée, avec son extrémité amincie, sur la section de transmission (18) jusqu'à ce que ladite douille coulissante (4) porte contre l'organe (28'), destiné à la fixation temporaire d'une douille coulissante, et
- la douille coulissante (4) est fixée par l'organe (28') destiné à la fixation temporaire d'une douille coulissante.

10. Procédé selon l'une des revendications 7 à 9, **caractérisé en ce que**
- l'élément de transmission de force (2, 2') est doté, sur la surface périphérique, extérieure, entre la cavité d'arrêt (26) et l'extrémité distale de la section de transmission (18), d'au moins une cavité de retenue (28, 28'), et
- la douille coulissante (4) est poussée, avec son extrémité amincie, sur la section de transmission (18), jusqu'à ce que la saillie d'arrêt (36) s'engage dans la cavité de retenue (28, 28'), dans une position intermédiaire.

11. Procédé selon l'une des revendications 7 à 10, dans lequel on utilise une douille coulissante (4), dont l'extrémité amincie est coudé vers l'extérieur, dans la direction radiale, et dans lequel, au cours du processus de compression radial, l'extrémité coudée est déformée dans la direction d'un meilleur alignement avec la surface périphérique de la section de transmission (18), extérieure.

12. Procédé selon l'une des revendications 7 à 11, dans lequel l'élément de transmission de force (2, 2') et la douille coulissante (4), glissée sur lui, sont pressés dans la direction axiale, sachant que la saillie d'arrêt (36) est amenée dans une position opposée à la cavité d'arrêt (26).

13. Procédé selon l'une des revendications 7 à 12, dans lequel le processus de pression axial est suivi d'un processus de compression, dans lequel la saillie d'arrêt (36) est enclenchée dans la cavité d'arrêt (26).
